# FASCICULE DE BREVET EUROPEEN

(11) **EP 2 030 756 B1**
(45) Date de publication et mention de la délivrance du brevet: **14.12.2011**
(21) Numéro de dépôt: 08162398.5
(22) Date de dépôt: 14.08.2008
(51) Int. Cl.: B29C 45/16, A61D 9/00

(54) **Sangle de fixation, notamment pour l'équitation, et son procédé de fabrication.**
Befestigungsgurt, insbesondere für den Reitsport, und Verfahren zu seiner Herstellung.
Fastening strap, in particular for horse riding, and its method of manufacaturing.

(30) Priorité: 31.08.2007 FR 0706122
(43) Date de publication de la demande: 04.03.2009
(73) Titulaire: Phoenix Innoplast, 64400 Oloron Sainte Marie (FR)
(72) Inventeur: Hodl, Manfred, 64400 Bidos (FR); Pinto-Marques, Georges, 64400 Bidos (FR)
(74) Mandataire: Chevalier, Renaud Philippe

(56) Documents cités:
- FR-A- 2 608 693
- JP-A- 59 196 229
- US-A- 4 727 524
- US-A- 4 760 714
- US-A- 4 974 398
- US-A- 5 244 134
- US-A1- 2005 251 970

## Description

La présente invention se rapporte à un procédé de fabrication d'un sangle de fixation comprenant au moins une partie rigide prolongée par une partie élastique, ainsi qu'à une sangle obtenue par ce procédé.

Une sangle de fixation est constituée par un corps longitudinal qui peut être réalisé, selon les cas, dans un unique matériau, ou dans deux matériaux rattachés l'un à l'autre afin de ménager une partie rigide et une partie élastique par exemple.

Plus spécifiquement, il est déjà connu de concevoir une sangle pour attacher une coque de protection d'une guêtre sur un membre d'un cheval.

Pour cela, un premier type de sangle connu est constitué par une sangle comprenant une unique partie élastique afin de s'adapter aux mensurations de l'animal. Cette sangle est dotée d'une fermeture par Velcro® à l'aide de bouclettes et de crochets ménagés sur les faces interne et externe de ladite sangle. Cette sangle est fixée de manière définitive dans la coque par couture.

Une variante de ce type de sangle à fermeture par Velcro® vise à permettre une fixation amovible de la sangle dans la coque. Pour cela, la sangle est glissée au travers de passants ménagés dans la coque rigide, et contourne entièrement celle-ci.

Néanmoins, l'inconvénient principal de ce type de sangle réside dans le fait que l'efficacité des fermetures par Velcro® diminue en raison de l'accumulation de poussières ou particules de terre intempestives entre les bouclettes et crochets.

Un autre type de sangle, élastique ou en cuir, comprend un bouclier pour la fermeture par enfilage et blocage. La sangle dispose de trous à une extrémité, et d'une boucle métallique munie d'une tige à l'extrémité opposée. Cependant, la fermeture de cette sangle peut être laborieuse à mettre en oeuvre, notamment en hiver lorsque le cavalier doit actionner la tige afin de l'introduire dans un trou alors que ses doigts sont engourdis par le froid.

Un autre type de sangle comprend un élastique à une extrémité duquel est cousue une partie rigide, pouvant être en cuir ou en plastique, équipée de trous. Cette partie rigide sert à fermer la sangle sur un piton rigide monté sur la coque. La sangle est attachée de façon fixe ou amovible par l'autre extrémité de l'élastique sur la coque. Une telle sangle nécessite donc une étape de couture relativement laborieuse à réaliser.

Le document FR 2 608 693 décrit un autre type de sangle d'accrochage pour un protecteur de jambe de cheval, la sangle étant réalisée par moulage ou surmoulage d'une structure souple, avec un éventuel renforcement textile.

Par ailleurs, et dans d'autres domaines :
- le document JP 59 196229 propose de lier par soudure une partie centrale réalisée par injection d'une dureté donnée, à une partie périphérique réalisée par injection d'une résine de dureté inférieure,
- le document US 5 244 134 divulgue une liaison par surmoulage total entre un insert rigide et un demi-bracelet de montre obtenu par moulage d'un plastique flexible,
- le document US 2005/251970 décrit un procédé de fabrication d'une bande flexible comprenant un squelette rigide réalisé par injection d'un matériau plastique dur, et une bande flexible moulée en partie autour du squelette.
- le document US 4 727 524 divulgue un bracelet de montre comprenant une bande réalisée par injection d'une résine flexible, ladite bande étant liée à un boitier de montre rigide par surmoulage,
- le document US 4760714 décrit un bracelet de montre réalisé par injection d'un premier matériau thermoplastique flexible, avec un fermoir réalisé par injection d'un second matériau thermoplastique rigide, où le fermoir et le bracelet forment une liaison par soudure par fusion.

La présente invention a pour but de remédier à tout ou partie des inconvénients évoqués précédemment, et consiste pour cela en un procédé de fabrication d'un sangle de fixation comprenant deux parties rigides et une partie élastique intercalée entre les deux parties rigides, le procédé comprenant les étapes visant à :
a) mettre en oeuvre deux premières opérations de moulage d'un premier matériau dans deux moules respectifs en vue de réaliser les deux parties rigides,
b) positionner ensuite les deux parties rigides obtenues dans un second moule à distance l'une de l'autre,
c) mettre en oeuvre une seconde opération de moulage dans le second moule à l'aide d'un second matériau compatible avec le premier matériau, de façon à obtenir une liaison par soudure par fusion entre les deux parties rigides et la partie élastique intercalaire.

Le procédé selon l'invention est par conséquent particulièrement avantageux car la technique de fabrication par moulage et surmoulage permet :
- l'obtention de formes libres pour les parties rigides. En effet, celles-ci peuvent être par exemple droites ou incurvées,
- l'obtention de formes libres pour la partie élastique, à la différence des élastiques classiques sur le marché qui sont par contrainte de fabrication droite avec des épaisseurs et des largeurs constantes,
- de créer des sangles autonomes car le système de fermeture peut être intégré dans les parties rigides de la sangle. Cela laisse également plus de latitude quant au choix du système de fermeture de la sangle (fixation trou/piton ou autres...).

Bien évidemment, le choix des premier et second matériaux sera effectué de manière à ce que les caractéristiques de l'élasticité et de la mémoire obtenues permettent un fonctionnement optimal durable dans le temps.

Selon un mode de réalisation préféré de l'invention, les premières opérations de moulage la seconde opération de moulage sont réalisées par injection des premier et second matériaux.

Selon une autre caractéristique de l'invention, les parties rigides et élastique sont réalisées dans des matériaux compatibles en termes de soudure par fusion choisis dans le groupe formé par le polymère SBS, le PVC avec plastifiant, les polyoléfines et autres élastomères compatibles.

Préférentiellement, une zone est ménagée dans les parties rigides lors des premières opérations de moulage afin de constituer une interface pour la soudure par fusion avec le second matériau lors de la seconde opération de moulage.

La présente invention se rapporte également à une sangle de fixation comprenant une partie élastique intercalée entre une première et une seconde parties rigides, la sangle étant obtenue par la mise en oeuvre du procédé selon l'invention.

Plus généralement, il doit être bien compris qu'une sangle selon l'invention peut comprendre une pluralité de parties rigides et/ou de parties élastiques liées les unes aux autres. Ces différentes parties peuvent présenter des rigidités et/ou des élasticités variables.

Avantageusement, la première partie rigide est équipée de moyens permettant une fixation amovible de ladite sangle sur un support.

Préférentiellement, la première partie rigide comprend des moyens de fermeture de ladite sangle conçus pour coopérer avec des moyens de fermeture complémentaires présentés par la seconde partie rigide.

Préférentiellement encore, les moyens de fermeture et les moyens de fermetures complémentaires sont respectivement constitués par au moins un piton et au moins un trou, ou inversement.

Avantageusement encore, la sangle est conçue pour attacher une coque de protection d'une guêtre sur un membre d'un cheval.

L'invention sera mieux comprise à l'aide de la description détaillée qui est exposée ci-dessous en regard du dessin annexé dans lequel :
Les figures 1 et 2 sont respectivement des vues de la face interne d'une première sangle et d'une seconde sangle selon l'invention ;
Les figures 3 et 4 sont respectivement des vues de la face externe de la première sangle et de la seconde sangle représentées aux figures 1 et 2.

Dans la description détaillée qui va suivre des figures définies ci-dessus, les mêmes éléments ou les éléments remplissant des fonctions identiques pourront conserver les mêmes références de manière à simplifier la compréhension de l'invention.

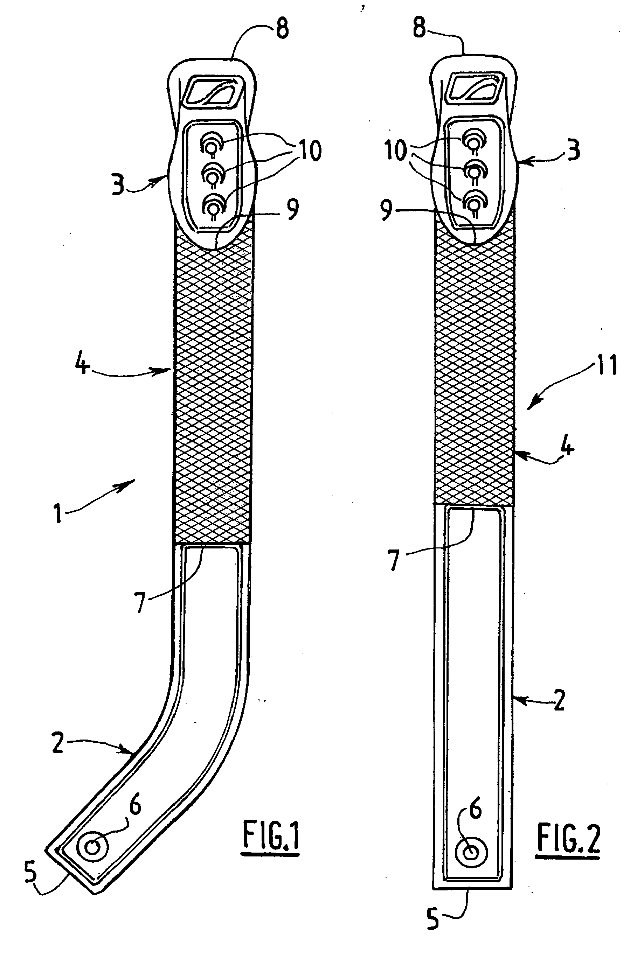

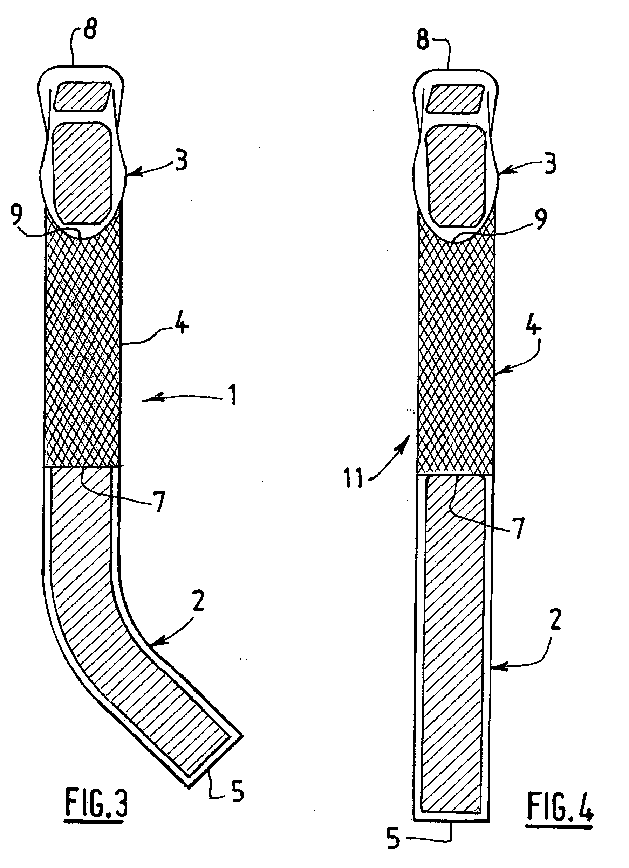

Une première sangle 1 selon l'invention, telle que représentée aux figures 1 et 3, est réalisée à l'aide de trois parties 2 à 4 qui ont été réunies à l'issue de plusieurs opérations de moulage par injection.

Plus précisément, la première partie rigide 2 incurvée et la seconde partie rigide 3 droite sont chacune obtenues par la mise en oeuvre d'une opération de moulage au cours de laquelle un matériau, par exemple du polymère SBS, est injecté dans un moule possédant la forme correspondante.

La première partie rigide 2 est réalisée de façon à présenter une première extrémité 5 équipée d'un piton 6, et une seconde extrémité 7 prolongée par une languette formant interface (non représentée).

La seconde partie rigide 3 est réalisée de façon à présenter une première extrémité 8 libre, et une seconde extrémité 9 prolongée par une languette formant interface (non représentée). La seconde partie rigide 3 possède par ailleurs une zone centrale comportant une pluralité de trous 10 alignés destinés à coopérer avec le piton 6 pour fermer la sangle 1.

La première partie rigide 2 et la seconde partie rigide 3 sont ensuite déposées dans un second moule adéquat afin de subir une opération de surmoulage. Pour cela, elles sont disposées dans le moule à distance l'une de l'autre de manière à permettre l'injection d'un second matériau conçu pour constituer la partie élastique 4 intercalaire.

Le matériau constitutif de la partie élastique 4 est choisi de façon à être compatible avec la matériau des parties rigides 2, 3 de façon à permettre une soudure par fusion au niveau de chaque interface lors de l'opération de surmoulage. L'homme du métier aura toute latitude pour sélectionner ces différents matériaux en fonction de la destination de la sangle.

Une telle sangle 1 peut être avantageusement utilisée dans le domaine de l'équitation, et plus particulièrement pour attacher une coque de protection d'une guêtre sur un membre d'un cheval.

Dans cet exemple de réalisation, La sangle 1 ne comporte pas de moyen de fixation autorisant la fixation à demeure de la sangle 1 sur un support, notamment une coque de protection.

Une sangle 11, telle que représentée aux figures 2 et 4, diffère de la sangle 1 uniquement par le fait que la partie rigide 2 est désormais droite et non plus incurvée.

Il doit être ainsi bien compris que la fabrication d'une sangle selon le procédé faisant l'objet de la présente invention permet de réaliser des parties rigides et élastiques dont la forme est libre. Ceci est par conséquent hautement appréciable, tant d'un point de vue fonctionnel, puisque la sangle peut présenter en finalité une forme parfaitement optimisée pour l'usage qui va en être fait, que d'un point de vue purement esthétique.

## Revendications

1. Procédé de fabrication d'une sangle (1; 11) de fixation comprenant deux parties rigides (2, 3) et une partie élastique (4) intercalée entre les deux parties rigides (2, 3), le procédé comprenant les étapes visant à:
a) mettre en oeuvre deux premières opérations de moulage d'un premier matériau dans deux moules respectifs en vue de réaliser les deux parties rigides,
b) positionner ensuite les deux parties rigides obtenues dans un second moule à distance l'une de l'autre,
c) mettre en oeuvre une seconde opération de moulage dans le second moule à l'aide d'un second matériau compatible avec le premier matériau, de façon à obtenir une liaison par soudure par fusion entre les deux parties rigides et la partie élastique intercalaire.

2. Procédé selon la revendication 1, **caractérisé en ce que** les premières opérations de moulage et la seconde opération de moulage sont réalisées par injection des premier et second matériaux.

3. Procédé selon l'une quelconque des revendications 1 ou 2, **caractérisé en ce que** les parties rigide et élastique sont réalisées dans des matériaux compatibles en termes de soudure par fusion choisis dans le groupe formé par le polymère SBS, le PVC avec plastifiant, les polyoléfines et autres élastomères compatibles.

4. Procédé selon l'une quelconque des revendications 1 à 3, **caractérisé en ce qu'**au moins une zone est ménagée dans les parties rigides (2, 3) lors despremières opérations de moulage afin de constituer une interface pour la soudure par fusion avec le second matériau lors de la seconde opération de moulage.

5. Sangle (1; 11) de fixation comprenant une partie élastique (4) intercalée entre une première et une seconde parties rigides (2, 3), la sangle étant obtenue par la mise en oeuvre du procédé selon l'une quelconque des revendications 1 à 4.

6. Sangle (1; 11) selon la revendication 5, **caractérisée en ce que** la première partie rigide (2) est équipée de moyens permettant une fixation amovible de ladite sangle sur un support.

7. Sangle (1; 11) selon l'une quelconque des revendications 5 ou 6, **caractérisée en ce que** la première partie rigide (2) comprend des moyens de fermeture (6) de ladite sangle conçus pour coopérer avec des moyens de fermeture complémentaires (10) présentés par la seconde partie rigide (3).

8. Sangle (1; 11) selon la revendication 7, **caractérisée en ce que** les moyens de fermeture et les moyens de fermetures complémentaires sont respectivement constitués par au moins un piton (6) et au moins un trou (10), ou inversement.

9. Sangle (1; 11) selon l'une quelconque des revendications 5 à 8, **caractérisée en ce qu'**elle est conçue pour attacher une coque de protection d'une guêtre sur un membre d'un cheval.

## Claims

1. A method for manufacturing a fastening strap (1; 11) comprising two rigid portions (2, 3) and an elastic portion (4) inserted between the two rigid portions (2, 3), the method comprising the following steps:
a) implementing two operations for molding a first material in two respective molds in order to make the two rigid portions,
b) then positioning the two obtained rigid portions in a second mold spared apart from one another,
c) implementing a second molding operation in the second mold using a second material compatible with the first material, so as to obtain a fusion welded link between the two rigid portions and the inserted elastic portion.

2. The method according to claim 1, **characterized in that** the first molding operations and the second molding operation are done by injection of the first and second materials.

3. The method according to any one of claims 1 or 2, **characterized in that** the rigid and elastic portions are made from compatible materials in terms of fusion welding chosen from amongst the group made up of the SBS polymer, PVC with plasticizer, polyolefins and other compatible elastomers.

4. The method according to any one of claims 1 to 3, **characterized in that** at least one zone is formed in the rigid portions (2, 3) during first molding operations in order to form an interface for fusion welding with the second material during the second molding operation.

5. A fastening strap (1; 11) comprising an elastic portion (4) inserted between a first and a second rigid portion (2, 3), the strap being obtained by implementing the method according to any one of claims 1 to 4.

6. The strap (1; 11) according to claim 5, **characterized in that** the first rigid portion (2) is equipped with means allowing said strap to be removably fixed on a support.

7. The strap (1; 11) according to any one of claims 5 or 6, **characterized in that** the first rigid portion (2) comprises closing means (6) of said strap designed to cooperate with complementary closing means (10) of the second rigid portion (3).

8. The strap (1; 11) according to claim 7, **characterized in that** the closing means and the complementary closing means are made up of at least one peg (6) and at least one hole (10), respectively, or vice versa.

9. The strap (1; 11) according to any one of claims 5 to 8, **characterized in that** it is designed to attach a protective shell of a gaiter on a limb of a horse.

## Patentansprüche

1. Verfahren zur Herstellung eines Befestigungsgurts (1; 11), der zwei starre Abschnitte (2, 3) und einen elastischen Abschnitt (4) zwischen den zwei starren Abschnitten (2, 3) umfasst, wobei das Verfahren die Schritte umfasst, die abzielen auf:
a) die Durchführung von zwei ersten Formvorgänge eines ersten Materials in zwei jeweiligen Formen, um die zwei starren Abschnitte herzustellen,
b) die darauf folgende voneinander entfernte Positionierung der zwei hergestellten starren Abschnitte in einer zweiten Form,
c) die Durchführung eines zweiten Formvorgangs in der zweiten Form mit Hilfe eines zweiten Materials, das mit dem ersten Material kompatibel ist, um eine Schmelzschweißverbindung zwischen den zwei starren Abschnitten und dem zwischengestellten elastischen Abschnitt zu erhalten.

2. Verfahren nach Anspruch 1, **dadurch gekennzeichnet, dass** die ersten Formvorgänge und der zweite Formvorgang durch Einspritzen des ersten und zweiten Materials durchgeführt werden.

3. Verfahren nach einem der Ansprüche 1 oder 2, **dadurch gekennzeichnet, dass** der starre und elastische Abschnitt aus Materialien, die für das Schmelzschweißen kompatibel sind, hergestellt und aus der Gruppe ausgewählt sind, die von dem SBS-Polymer, dem PVC mit Weichmacher, den Polyolefinen und anderen kompatiblen Elastomeren gebildet wird.

4. Verfahren nach einem der Ansprüche 1 bis 3, **dadurch gekennzeichnet, dass** während der ersten Formvorgänge mindestens ein Bereich in die starren Abschnitte (2, 3) eingearbeitet ist, um für das Schmelzschweißen mit dem zweiten Material beim zweiten Formvorgang eine Schnittstelle zu bilden.

5. Befestigungsgurt (1; 11), der einen elastischen Abschnitt (4) zwischen einem ersten und einem zweiten starren Abschnitt (2, 3) umfasst, wobei der Gurt durch Umsetzung des erfindungsgemäßen Verfahrens nach einem der Ansprüche 1 bis 4 hergestellt ist.

6. Gurt (1; 11) nach Anspruch 5, **dadurch gekennzeichnet, dass** der erste starre Abschnitt (2) mit Mitteln ausgestattet ist, die eine lösbare Befestigung des Gurts auf einer Unterlage erlauben.

7. Gurt (1; 11) nach einem der Ansprüche 5 oder 6, **dadurch gekennzeichnet, dass** der erste starre Abschnitt (2) Verschlussmittel (6) des Gurts umfasst, die ausgebildet sind, um mit komplementären Verschlussmittel (10) zusammenzuarbeiten, die von dem zweiten starren Abschnitt (3) angeboten werden.

8. Gurt (1; 11) nach Anspruch 7, **dadurch gekennzeichnet, dass** die Verschlussmittel und die komplementären Verschlussmittel jeweils von mindestens einem Hakenstift (6) und von mindestens einem Loch (10) gebildet werden oder umgekehrt.

9. Gurt (1; 11) nach einem der Ansprüche 5 bis 8, **dadurch gekennzeichnet, dass** er zum Anbringen einer Schutzschale einer Gamasche auf einer Gliedmaße eines Pferdes ausgebildet ist.
